# EUROPEAN PATENT APPLICATION

(11) **EP 3 613 980 A1**
(43) Date of publication of application: **26.02.2020**
(21) Application number: 18788549.6
(22) Date of filing: 18.04.2018
(51) Int. Cl.: F03D 3/06, F03B 3/12, F03D 13/20

(54) **VERTICAL-SHAFT TURBINE**

(30) Priority: 19.04.2017 JP 2017083076; 22.12.2017 JP 2017246127
(71) Applicant: Dreambird Inc., Tokyo 176-0012 (JP)
(72) Inventor: INAGAKI,Seiji, Tokyo 176-0012 (JP)
(74) Representative: Michalski Hüttermann & Partner Patentanwälte mbB
(86) International application number: PCT/JP2018/016043
(87) International publication number: WO 2018/194105

(57) **Abstract**

Provided is a vertical axis turbine with which blade lift is further increased, the use efficiency of the wind energy and the like is further improved, and initial motion is easy and reliable. One aspect of the present invention includes: a plurality of blades 20 that are connected to a rotation axis 11, have a blade span in the direction of the rotation axis 11 and a chord length in the rotation direction of the rotation axis 11, and are formed such that the distance thereof from the rotation axis 11 changes in a logarithmic spiral form from a blade tip 91 toward a blade root 92; small, so-called vortex generators 50 disposed on the blade surfaces; and so-called winglets 60 provided at the blade tips. Arms 30B connecting the blades 20 and the rotation axis 11 are also in a spiral or logarithmic spiral form and are formed in an airfoil shape so as to provide a sub-blade effect.

## Description

### Technical Field

The present invention relates to vertical axis turbines for use in wind power generation and the like.

### Background Art

Turbines used for wind power generation and the like are roughly classified into horizontal axis turbines, whose rotation axis is parallel to the wind direction, and vertical axis turbines, whose rotation axis is perpendicular to the wind direction. Although the horizontal axis turbines are said to have high wind-energy conversion efficiency, because the direction of the rotation axis needs to be changed such that the wind receiving surface is perpendicular to the wind direction, a direction control mechanism is needed, and a loss occurs every time the wind direction changes. Furthermore, because a nacelle that houses a generator and the like needs to be disposed at a high place, it is difficult to perform maintenance, and certain considerations need to be made by providing a structure for supporting the center of gravity located at a high place and a control mechanism for ensuring safety. Accordingly, the horizontal axis turbines are disadvantageous in areas where the wind direction often changes and have drawbacks that they require large installation areas and that the mechanism itself tends to be complex and expensive.

On the other hand, the vertical axis turbines are vertically fixed to the ground, thus making it possible to set the rotation axis always perpendicular to the wind direction. A typical shape of a vertical axis turbine is such that the blades are not directly attached to the rotation axis, a certain radius is maintained with a disc-shaped base or horizontally extending arms, and a blade span direction is parallel to the rotation axis. Because the vertical axis turbines do not depend on the wind direction, a direction control unit is not necessary, and a heavy object, such as a generator, can be disposed at a low place near the ground. Hence, the vertical axis turbines have more simple and stable structure than the horizontal axis turbines. Furthermore, because the rotation radius does not increase with the blade span, the installation area can be small.

Various efforts have been made to improve low self-starting capability of the vertical axis turbines. In many cases, another mechanism is used only to improve the self-starting capability, which, in many cases, results in an increase in cost and failure to obtain a stable output in a high-speed operation. Under the circumstances, in contrast to straight blade turbines, which are thought to have the highest wind-energy conversion efficiency among the vertical axis turbines, a vertical axis turbine in which the blades are given a sweepback angle so as to be inclined on the rotation path of the blades (i.e., the blades are in a helical-spiral form) has been developed (helical turbine) (Patent Literature 1).

This helical turbine has an airfoil-shaped section and is configured to obtain rotation mainly by lift. The helical shape ensures that, in all the rotation angle phases, some portion of the blade section always has an optimum angle of attack with respect to the fluid flow. Furthermore, similarly, it is ensured that, in all the rotation angle phases, there is a section that can obtain a rotational moment by drag. This facilitates self-starting of the turbine and stabilizes the rotation.

Furthermore, to mainly improve the structural strength and the like of the above-described helical turbine, a vertical axis turbine in which the blades are inclined and deformed so as to have the maximum rotation radius at a position in the middle of the blade span and the minimum rotation radius at blade tips and in which a plurality of blades are connected to one another by a ring-shaped member so as to have a barrel shape has been developed (Patent Literature 2).

### Citation List

### Patent Literature

PTL 1: Japanese Unexamined Patent Application Publication (Translation of PCT Application) 11-506180
PTL 2: Japanese Patent No. 5651680

### Summary of Invention

### Technical Problem

As described above, although the vertical axis turbines are advantageous in terms of installation area and ease of maintenance, even higher wind-energy conversion efficiency and the like, as well as even easier and more reliable self-starting capability, are required. Under the circumstances, the inventor has found that it is possible to further improve the use efficiency of wind energy and the like and to facilitate and ensure self-starting by further increasing the rotational moment caused by the lift/drag generated by the blades of a vertical axis turbine, and has realized the vertical axis turbine of the present invention.

### Solution to Problem

Specifically, a vertical axis turbine of the present invention includes: a vertical rotation axis; a blade that is disposed around the rotation axis, that is formed so as to expand at least in one section among sections between a blade root, which is an end closer to the rotation axis, and a blade tip, which is an end farther from the rotation axis that has an airfoil shape in a horizontal section, which is a section substantially perpendicular to an extending direction of the rotary shaft, and that is formed such that the horizontal distance of the horizontal section from the rotary shaft changes in a logarithmic spiral form in an axial direction of the rotary shaft; and an arm connecting the rotary shaft and the blade.

Furthermore, it is desirable that the blade have one or two or more slits formed in a blade span direction of the airfoil.

Furthermore, it is desirable that the blade have, on the surface of the airfoil, a vortex generator, serving as a fluid-vortex generating mechanism, for producing a fluid vortex.

Furthermore, it is desirable that the blade have, at a leading edge of the airfoil, a dogtooth shape, serving as a fluid-vortex generating mechanism, for producing a fluid vortex.

Furthermore, it is desirable that the blade have, at a blade tip of the airfoil, a flat or three-dimensional winglet, serving as a blade-tip-vortex preventing mechanism, for preventing or utilizing a blade tip vortex due to a fluid.

Furthermore, it is desirable that a chord length of the airfoil of the blade decrease or increase as the distance between the rotation axis and a chord center of the blade increases in a spiral form from a blade root side toward a blade tip side of the rotation axis.

Furthermore, it is desirable that the vertical axis turbines be connected in multiple stages in the axial direction of the rotation axis.

Furthermore, it is desirable that, in the connected vertical axis turbine, one vertical axis turbine have a tubular rotation axis, the other vertical axis turbine have a rod-shaped rotation axis to be inserted into the tubular rotation axis, the rotation axes rotate in opposite directions, a magnet of a contra-rotating generator be connected to one rotation axis, a coil of the contra-rotating generator be connected to the other rotation axis, and the magnet and the coil be configured to rotate in opposite directions.

Furthermore, it is desirable that, in the connected vertical axis turbine, the vertical axis turbines be disposed above and below the contra-rotating generator so as to sandwich the contra-rotating generator and such that central axes of the rotation axes are aligned, the upper and lower rotation axes be each connected to a corresponding one of a coil-side rotor and a magnet-side rotor of the contra-rotating generator, and the upper and lower rotary shafts be rotated in opposite directions to rotate the magnet and the coil in opposite directions.

Furthermore, it is desirable that a plurality of the vertical axis turbines be installed adjacent to each other in parallel, and the rotation axes of the vertical axis turbines transmit power via a pulley, a belt, a gear, or the like.

Furthermore, it is desirable to further include an integrated frame with which a plurality of vertical-axis spiral turbines can be disposed on a same circumference, and a rotation axis of the integrated frame, and a track groove that supports an outer circumferential leg of the integrated frame and allows rotation be provided to install a plurality of vertical-axis-turbine assemblies.

Furthermore, it is desirable that the rotation axis be configured to be extendable/contractable, the blade include slide blades divided in the blade span direction or a blade formed by stretching a sail over an airfoil frame that is formed of braces made of a flexible material, and the blade be configured to be collapsed by contracting the rotary shaft in the axial direction.

Furthermore, it is desirable that the installation direction of the rotation axis be parallel to the direction of a fluid flow.

### Advantageous Effects of Invention

A vertical axis turbine of the present invention can further improve the use efficiency of the wind energy and the like and facilitate and ensure self-starting by increasing the rotational moment due to the lift/drag produced on the blades.

### Brief Description of Drawings

[Fig. 1] Fig. 1 is a perspective view showing a schematic configuration of a vertical axis turbine according to an embodiment of the present invention.
[Fig. 2] Fig. 2 shows a schematic front configuration of a blade of the vertical axis turbine shown in Fig. 1.
[Fig. 3] Fig. 3 shows a schematic plan configuration of the blade of the vertical axis turbine shown in Fig. 1.

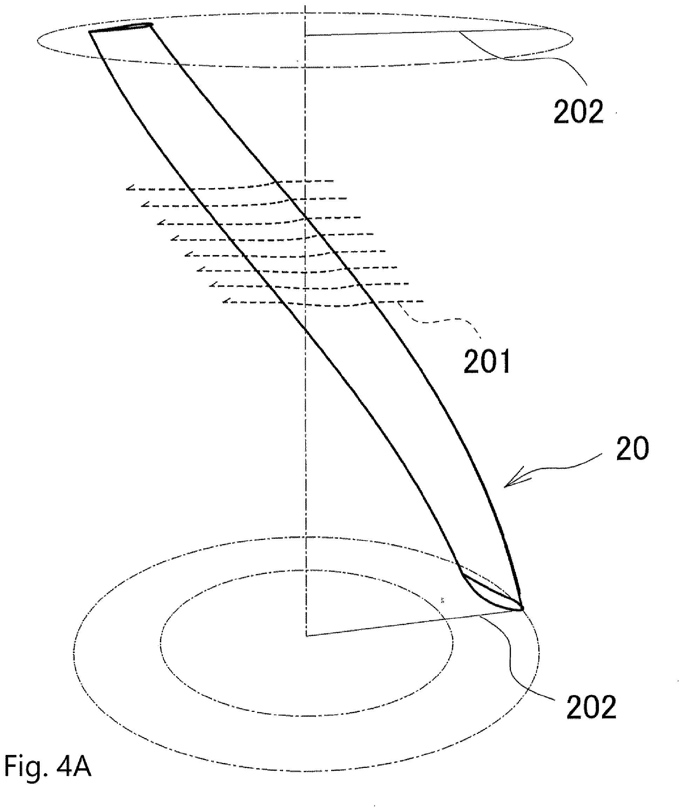

[Fig. 4A] Fig. 4A shows a flow of wind passing through a blade of a helical turbine (conventional type).

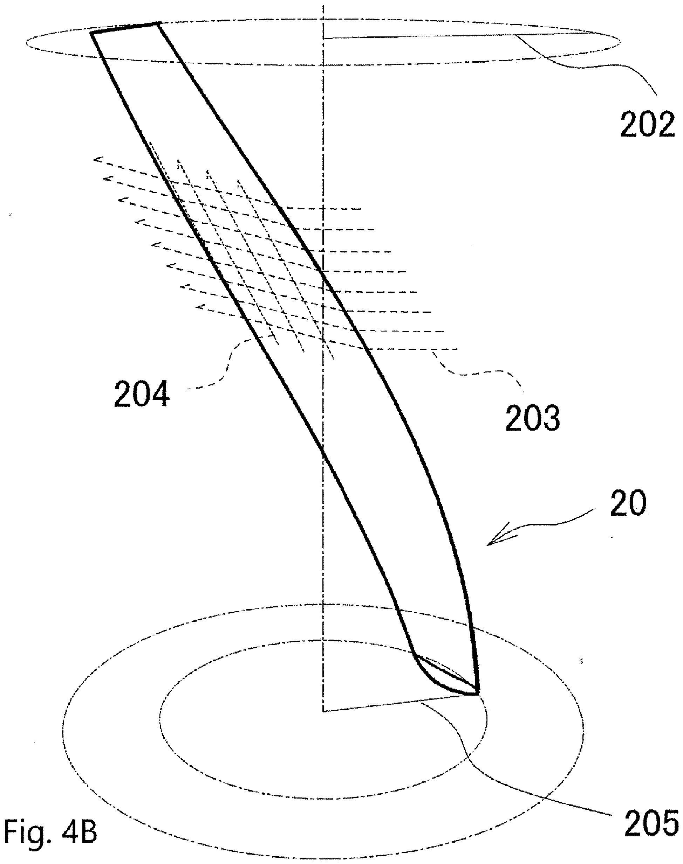

[Fig. 4B] Fig. 4B shows a flow of wind passing through a blade of the vertical axis turbine according to an embodiment of the present invention.
[Fig. 5A] Fig. 5A shows a modification of a basic shape according to an embodiment of the present invention.
[Fig. 5B] Fig. 5B shows another modification of the basic shape according to the embodiment of the present invention.
[Fig. 5C] Fig. 5C shows another modification of the basic shape according to the embodiment of the present invention.
[Fig. 6] Fig. 6 shows an example of combination with a helical turbine according to an embodiment of the present invention.
[Fig. 7] Fig. 7 shows an effect obtained by introducing slits according to an embodiment of the present invention.
[Fig. 8A] Fig. 8A shows various variation examples (types) of so-called vortex generators disposed on a blade surface, according to an embodiment of the present invention.
[Fig. 8B] Fig. 8B shows a state in which wedge-shaped convex vortex generators are provided on the blade surfaces, according to an embodiment of the present invention.
[Fig. 9A] Fig. 9A shows an outflow produced at a blade-side leading edge, according to an embodiment of the present invention.
[Fig. 9B] Fig. 9B shows a state in which a so-called dogtooth shape is provided on the blade-side leading edge, according to the embodiment of the present invention.

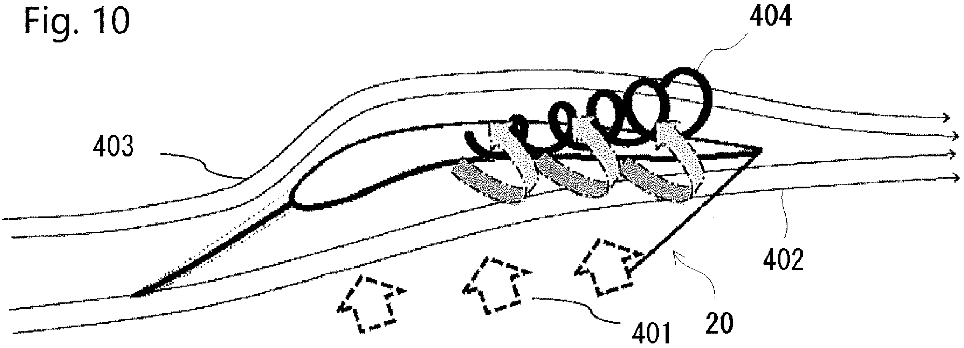

[Fig. 10] Fig. 10 shows a state in which a blade tip vortex is generated, according to an embodiment of the present invention.
[Fig. 11] Fig. 11 shows some examples (types) of winglets for suppressing a decrease in lift, according to an embodiment of the present invention.
[Fig. 12] Fig. 12 shows an example winglet that obtains propulsion using accelerated airflow and a blade tip vortex, according to an embodiment of the present invention.

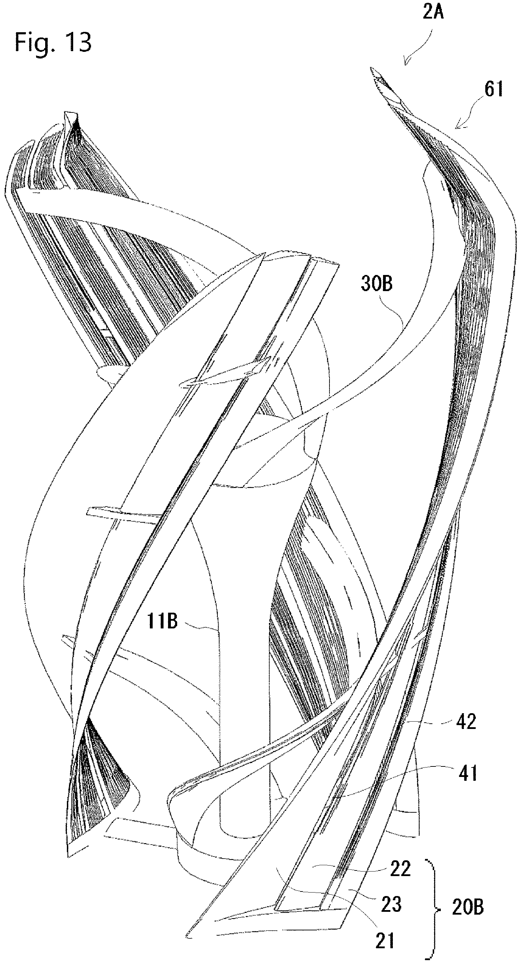

[Fig. 13] Fig. 13 shows an example in which arms are used as sub-blades, according to an embodiment of the present invention.
[Fig. 14] Fig. 14 shows a schematic configuration of a vertical axis turbine according to another embodiment of the present invention.
[Fig. 15] Fig. 15 shows airfoil-shaped sections of the vertical axis turbine according to the other embodiment of the present invention.
[Fig. 16] Fig. 16 shows so-called winglets of a vertical axis turbine according to still another embodiment of the present invention.
[Fig. 17] Fig. 17 shows other so-called winglets of a vertical axis turbine according to yet another embodiment of the present invention.
[Fig. 18A] Fig. 18A shows a so-called tandem structure state and an airflow path according to still another embodiment of the present invention.
[Fig. 18B] Fig. 18B shows a so-called tandem structure state and airflow paths according to yet another embodiment of the present invention.
[Fig. 18C] Fig. 18C shows a so-called tandem structure state and airflow paths according to still another embodiment of the present invention.
[Fig. 18D] Fig. 18D shows a so-called tandem structure state and an airflow path according to yet another embodiment of the present invention.
[Fig. 19] Fig. 19 is a perspective view of a multi-stage-structure vertical axis turbine to which a contra-rotating generator is attached.
[Fig. 20] Fig. 20 is a side view of a multi-stage-structure vertical axis turbine to which a contra-rotating generator is attached.
[Fig. 21] Fig. 21 is a side view of a multi-stage-parallel-structure vertical axis turbine to which a contra-rotating generator is attached.

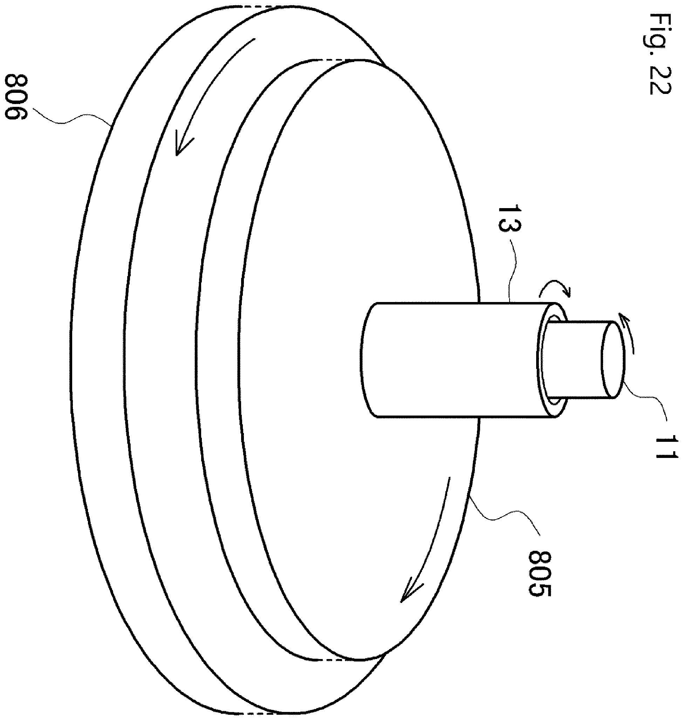

[Fig. 22] Fig. 22 is a perspective view showing another embodiment of the contra-rotating generator.
[Fig. 23] Fig. 23 is a vertical sectional view of the contra-rotating generator.
[Fig. 24] Fig. 24 is a perspective view of a collapsible vertical axis turbine according to an eighth embodiment.
[Fig. 25] Fig. 25 is a perspective view in a collapsed state, in the eighth embodiment.
[Fig. 26] Fig. 26 shows a modification of a collapsible vertical axis turbine.
[Fig. 27A] Fig. 27A is a perspective view showing another structure example of an expandable/contractable rotation axis.
[Fig. 27B] Fig. 27B is a perspective view showing the other structure example of the expandable/contractable rotation axis.
[Fig. 27C] Fig. 27C is a perspective view showing the other structure example of the expandable/contractable rotation axis.
[Fig. 28] Fig. 28 is a perspective view of a structure in which turbines are set in an integrated frame that uses the Magnus effect.
[Fig. 29] Fig. 29 is a side view of a horizontally installed vertical axis turbine.

### Description of Embodiments

A vertical axis turbine according to an embodiment of the present invention will be described below with reference to the drawings.

### <First Embodiment: Basic Shape of Blade>

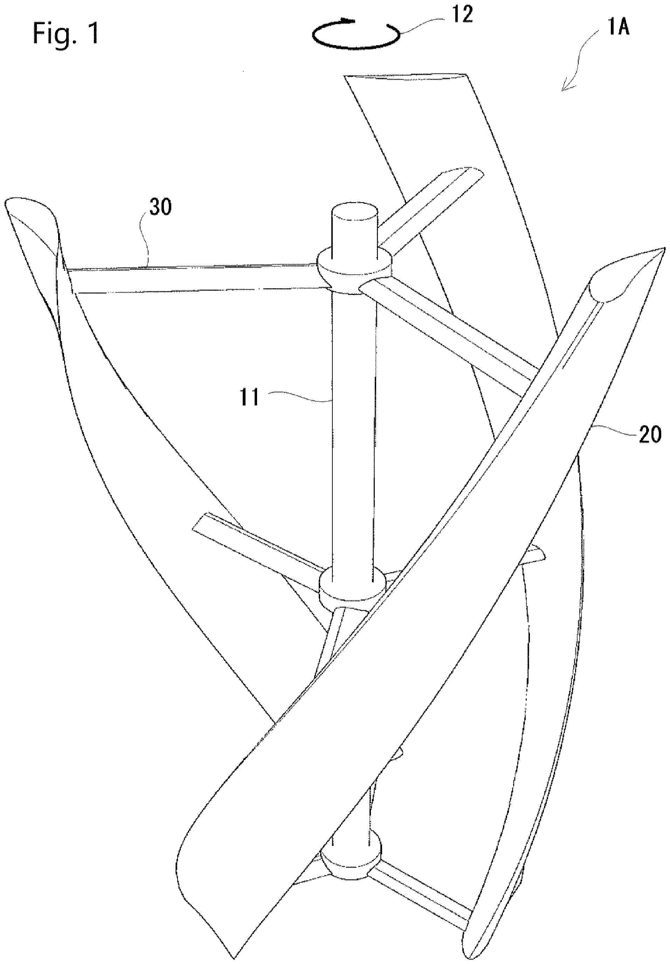

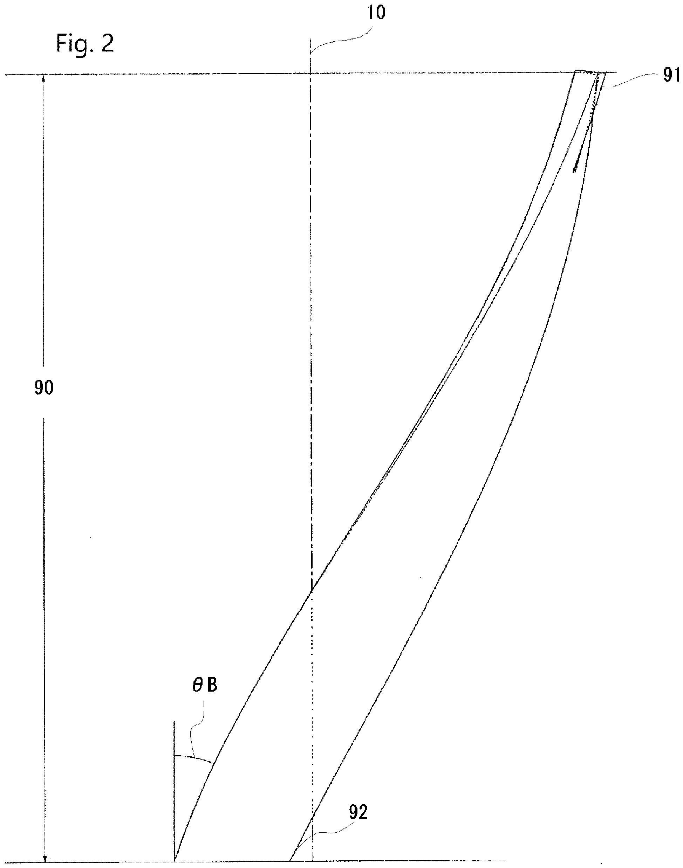

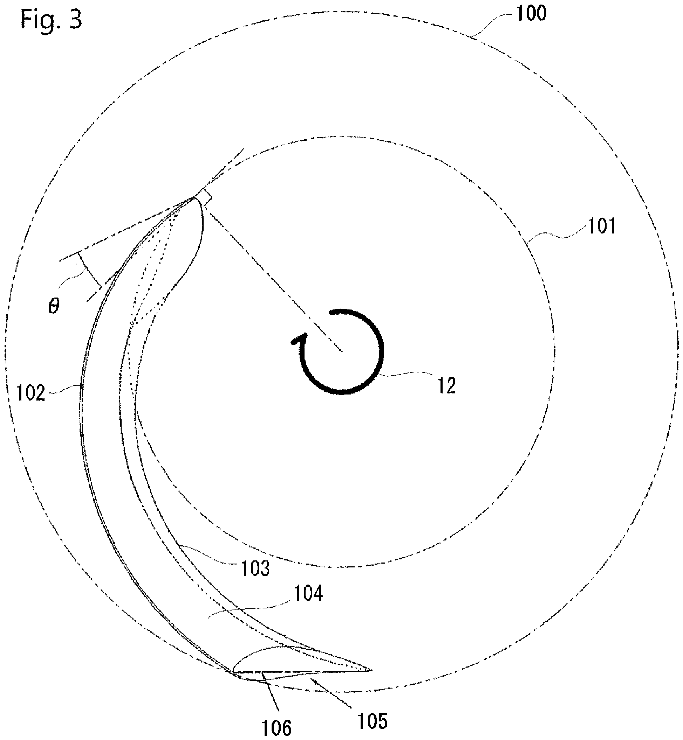

Fig. 1 is a perspective view showing a schematic configuration of a vertical axis turbine according to a first embodiment of the present invention, and Fig. 2 and Fig. 3 are a schematic front view and a schematic plan view of a blade portion thereof. As shown in Fig. 1, in the first embodiment, three blades 20 are attached to a rotation axis 11 via arms 30. Of these components, the blades 20 have an airfoil shape or an elongated-teardrop shape in a section (horizontal section) substantially perpendicular to an extending direction thereof, as shown in Figs. 1 and 3. In other words, the blades 20 are formed by laminating such sections in a top-bottom direction (extending direction). As shown in Fig. 2, in a section (vertical section) in the top-bottom direction (extending direction), each blade 20 is formed such that a horizontal distance thereof from the rotation axis 11 decreases in a logarithmic spiral form from a blade tip 91 on an upper side toward a blade root 92 on a lower side, as shown in Fig. 3.

Operation and movement of a vertical axis turbine 1A having the above-described configuration will be described. In Fig. 1, when a fluid, such as wind, flows from a direction perpendicular to the rotation axis 11, and each blade 20 is pressed by the fluid, because a line segment formed by the center line of the vertical section has a spiral form, some portion of a surface of the blade 20 is always located at an optimum position, generating torque causing initial rotation. In addition, because the blade 20 is formed such that a line segment formed by the center line of the vertical section thereof has a logarithmic spiral form, the effect of increasing an area of each blade is obtained, compared with the conventional helical turbine, and thus, more energy is obtained by receiving wind. As a result, it is possible to increase the torque during rotation, that is, to increase the rotational speed.

As described above, according to the first embodiment, because the plurality of (for example, three) blades 20 are disposed at equal intervals around the rotation axis 11, and the vertical section of each blade around the rotation axis 11 is formed in a substantially logarithmic spiral form from the blade tip to the blade root, it is possible to generate greater lift/torque and, thus, to increase the rotational speed.

### <Second Embodiment: Introduction of Slit>

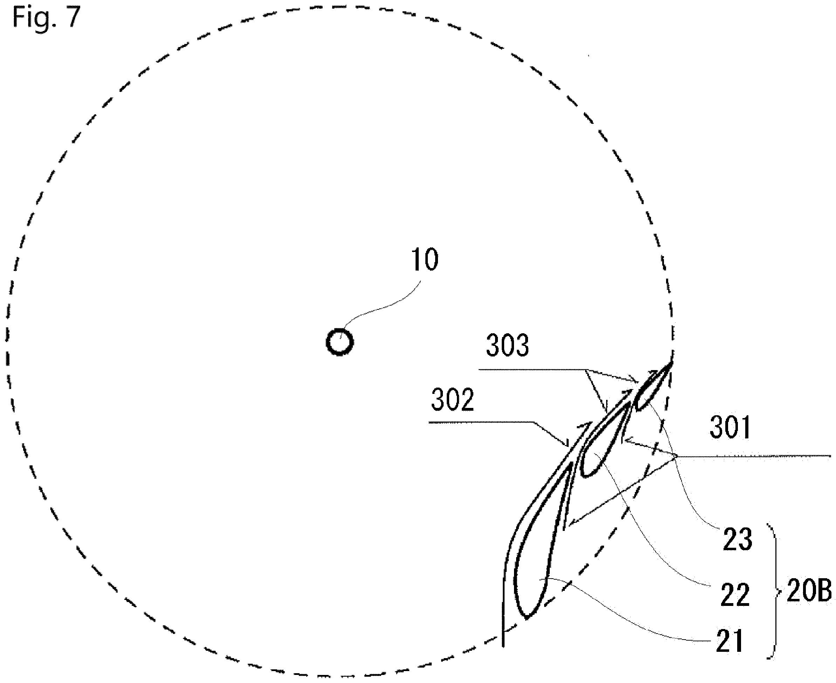

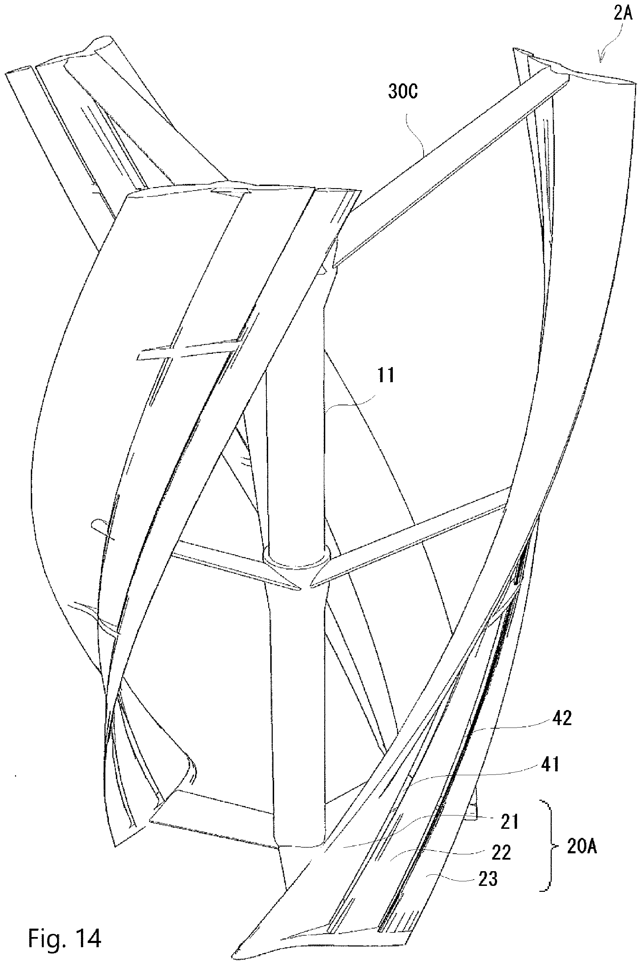

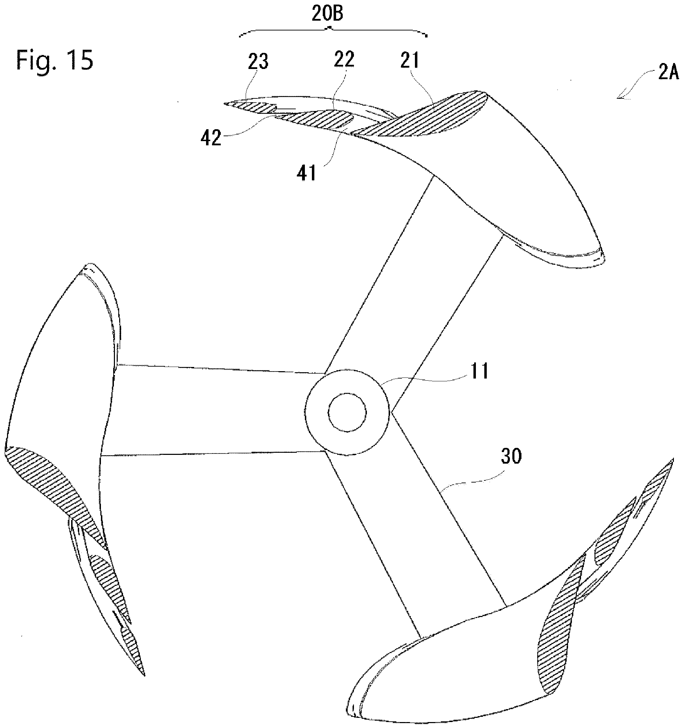

Fig. 14 shows a schematic configuration of a vertical axis turbine according to a second embodiment of the present invention, and Fig. 15 shows airfoil-shaped sections of blades thereof. In a vertical-axis logarithmic-spiral turbine 2A according to the second embodiment, as shown in Fig. 14, each blade 20A is configured to include a plurality of sub-blades (blade components) 21, 22, and 23 so as to have a plurality of slits 41 and 42. As shown in Fig. 7, these sub-blades are formed such that the airfoil shapes of the sub-blades slightly overlap one another, that is, such that a pointed end of the airfoil or teardrop shape in the horizontal section of the sub-blade 21 and an arc-shaped end of the same shape of the sub-blade 22 slightly overlap each other in front view, and the pointed end of the airfoil or teardrop shape in the horizontal section of the sub-blades 22 and the arc-shaped end of the same shape of the sub-blades 23 slightly overlap each other in front view. With this configuration, the fluid can smoothly pass through the slits. Although an example in which one blade is configured to have three sub-blades has been described above, the number of the sub-blades is not limited to three, but may be any natural number. In that case, the number of the slits is (the number of the sub-blades) minus one.

According to the second embodiment of the present invention, because the slits 41 and 42 are provided, when a fluid, such as wind, flows from a direction (substantially) perpendicular to the rotation axis 11, and each blade 20B is subjected to the pressing force from the fluid, the fluid (for example, the wind) escapes through the slits, as shown in Fig. 7. This delays the separation of the fluid (for example, the wind) from the blades, making it possible to achieve an effect of increasing the flow velocity of the wind and the like. As a result, it is possible to avoid a so-called stall condition occurring in a vertical axis turbine depending on the wind condition and to stably convert the wind energy into the rotational speed.

### <Third Embodiment: Arrangement of Vortex Generator>

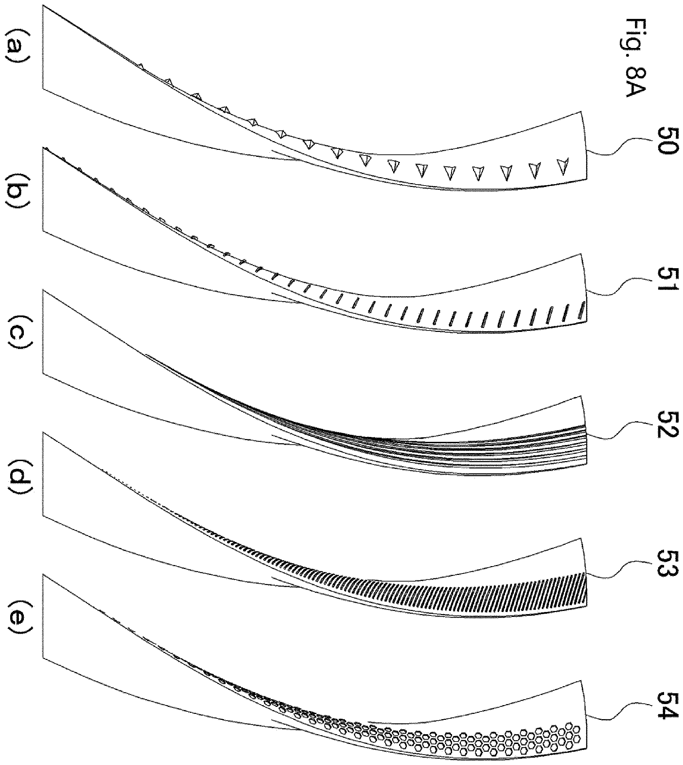

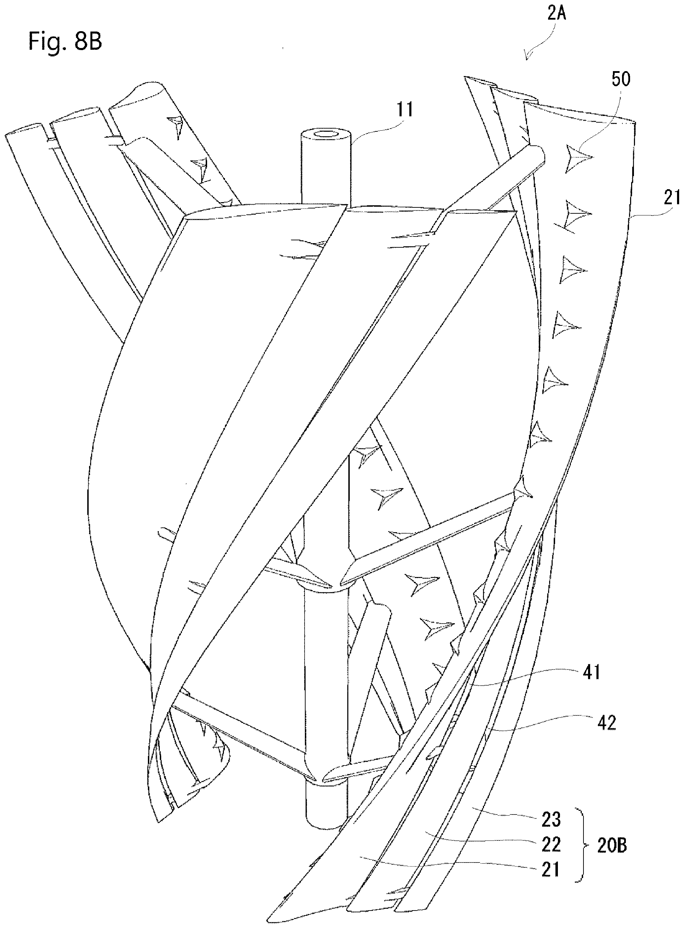

In a vertical axis turbine according to a third embodiment of the present invention, a plurality of small wedge-shaped convex vortex generators 50 ((a) of Fig. 8A) may be arranged on a surface of each blade 21, as shown in Fig. 8B. The vortex generators may have various shapes, and it is possible to employ, for example, a plate-shaped convex type 51 ((b) of Fig. 8A), a longitudinal-groove-shaped concave type 52 extending in a blade span direction of the blades ((c) of Fig. 8A), a transverse-groove-shaped concave type 53 extending in a chord direction of the blades ((d) of Fig. 8A), or a multiple small recessed concave type 54 ((e) of Fig. 8A). By providing convex or concave vortex generators on the blade surfaces, small vortexes are generated when the fluid flows on the surfaces of the blades, which makes it possible to delay the separation of the fluid from the blades. As a result, more lift can be generated from the wind energy, increasing torque, thus increasing the rotational speed.

### <Fourth Embodiment: Introduction of Dogtooth Shape>

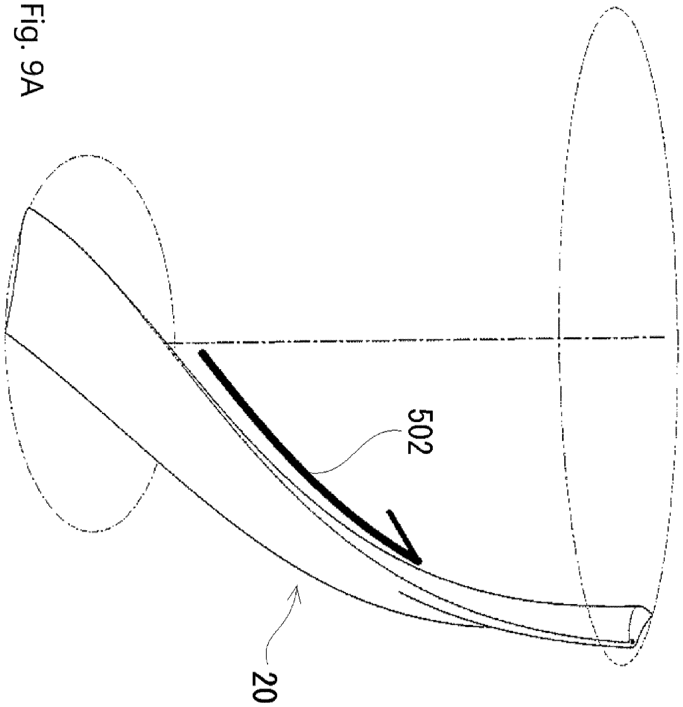

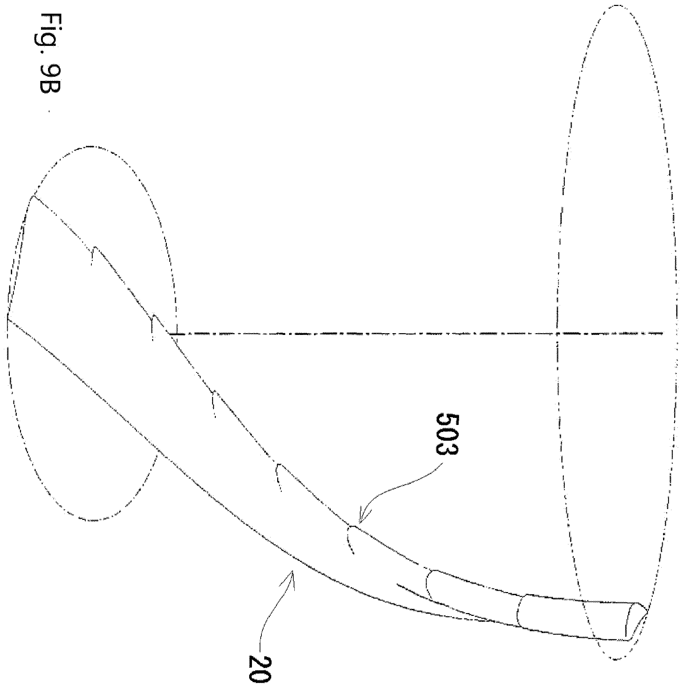

A vertical axis turbine according to a fourth embodiment of the present invention employs a function of introducing a so-called dogtooth portion 503, which has a jagged shape, at the leading edge of each blade, as shown in Fig. 9B. This acts on the airflow when the blades rotate, blocking an outflow 502, such as one shown in Fig. 9A, and generating a belt-like turbulent flow on upper surfaces of the blades. These effects stabilize, on the upper surfaces of the blades, the flow extremely diverted toward the blade tips, thus making it possible to have a function of stabilizing the lift.

### <Fifth Embodiment: Introduction of Winglet>

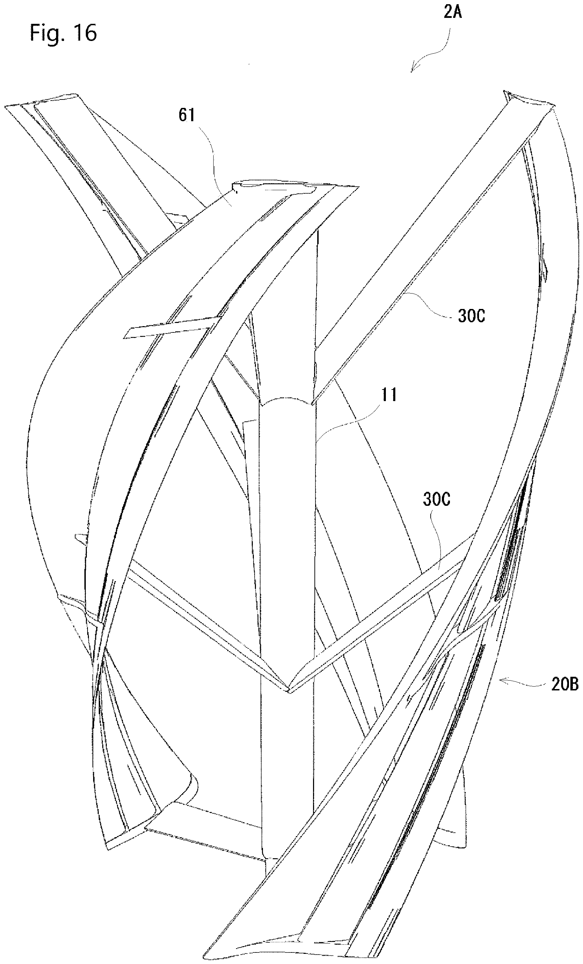

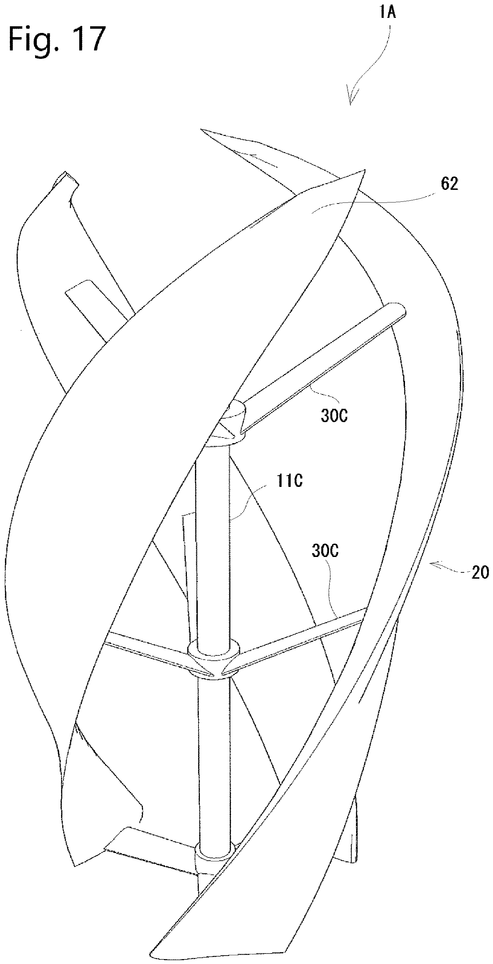

Figs. 16 and 17 are diagrams of vertical axis turbines according to a fifth embodiment 1 and a fifth embodiment 2 of the present invention, respectively, showing a state in which portions functioning as winglets are introduced at the blade tips of the blades. The winglets are blade tips obtained by machining the blade tips of the blades into a shape/angle different from that of the other portions of the blades, or blade tips to which members having such a different shape are attached. A schematic configuration of the vertical axis turbine according to the fifth embodiment 1 of the present invention is shown in Fig. 16. In the fifth embodiment of the present invention, each blade is formed of sub-blades and has slits, as in the second embodiment, and a curved winglet 61 is introduced at the blade tip of each blade. With the configuration having the winglets, the winglets act on the airflow when the blades rotate, generating blade tip vortexes, thus making it possible to have a function of suppressing a decrease in lift and reducing air resistance (induced drag).

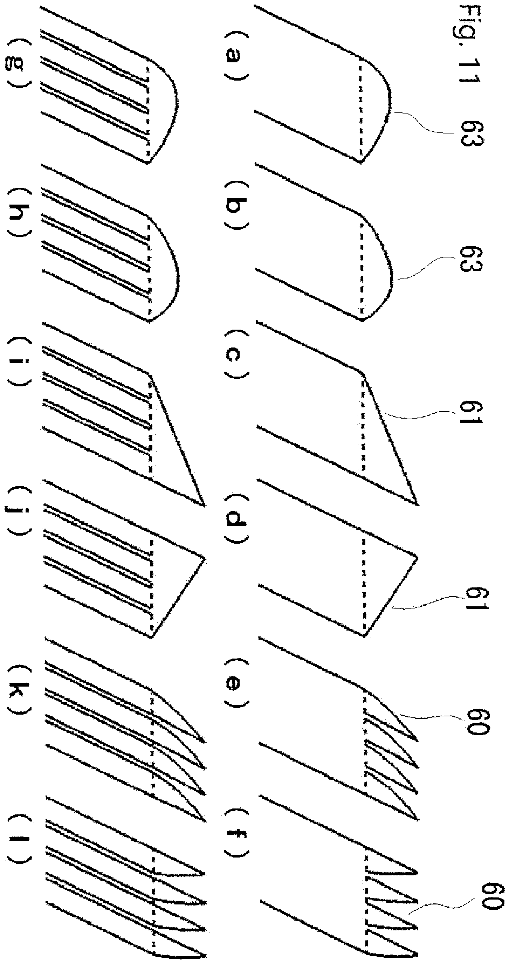

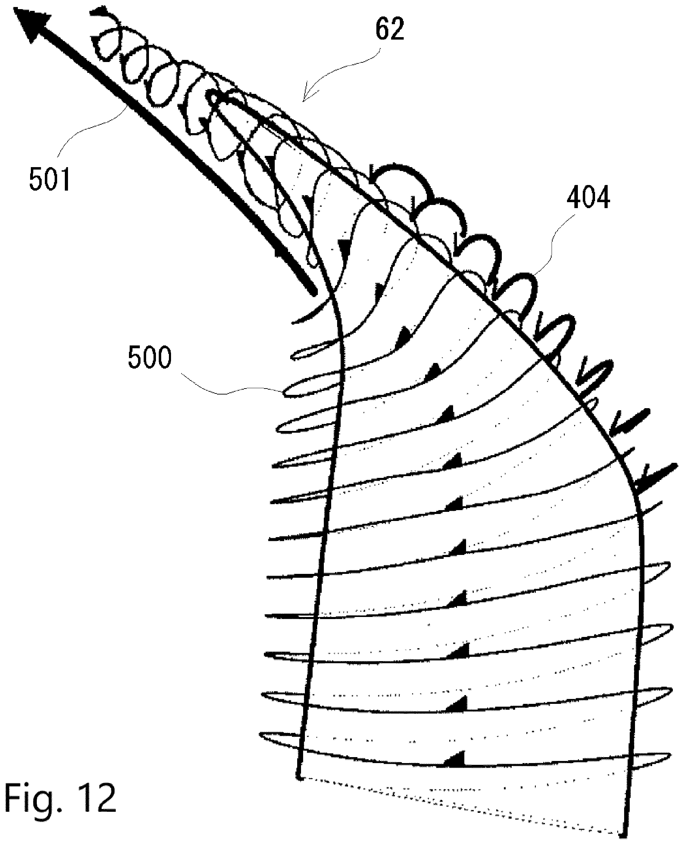

In the fifth embodiment 2 of the present invention, as shown in Fig. 17, a tapered shape 62 is formed at the blade tip of each blade 20. By providing a winglet-function equivalent portion at the blade tip of each blade, it is possible to provide an effect of suppressing generation of a blade tip (blade end) vortex. As shown in (a) to (1) of Fig. 11, there are various types of the shape of the winglets, such as narrowed tips, rounded tips, and divided tips. In the case of Fig. 17, the winglet 62 having a three-dimensional curve is introduced at the blade tip of each blade. The winglets 62 act on the airflow when the blades rotate, and, as shown in Fig. 12, a blade tip vortex 404 and increased flow 500 on the surface of the blade are merged, making it possible to have a function of producing propulsion 501 that pushes the blade in the traveling direction. As a result, more torque is generated from the wind energy, making it possible to achieve an increase in the rotational speed.

Preferably, as shown in Fig. 12, these winglets are introduced as those having a shape that is tapered while retracting inward, and backward in the rotational direction, with respect to the blades.

### <Sixth Embodiment: Change in Blade Chord Length>

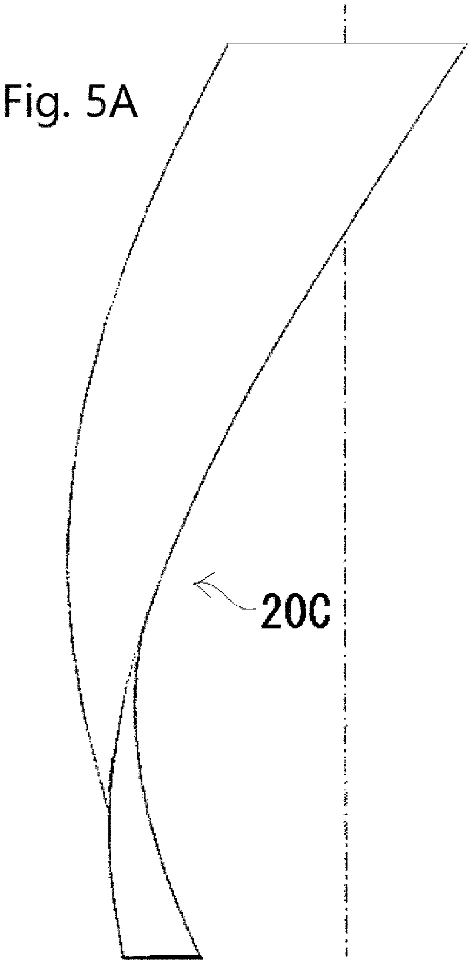

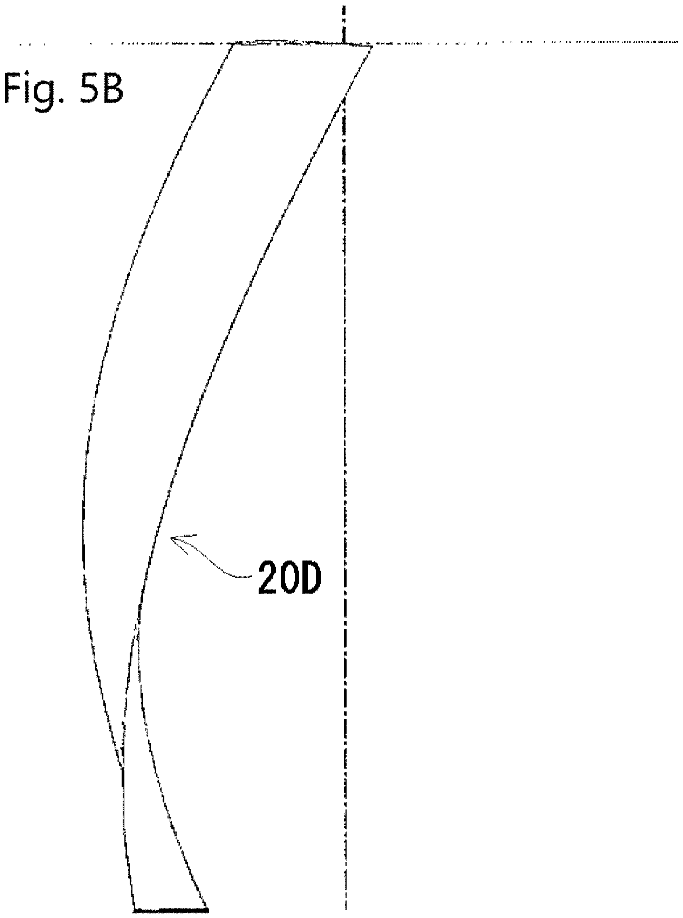

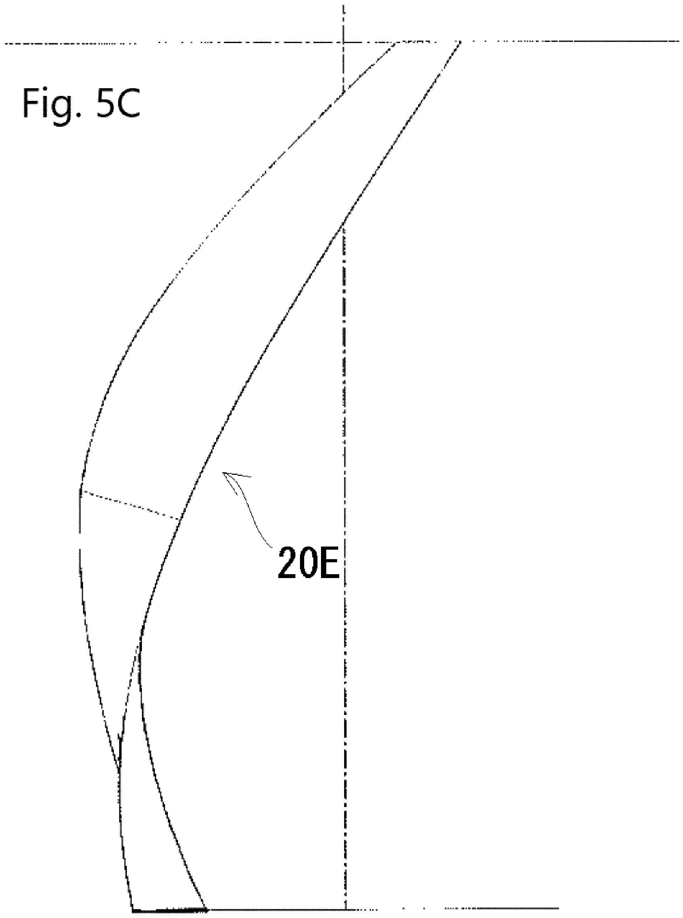

A shape in which the chord length increases from the blade root toward the blade tip, as shown in Fig. 5A, a shape in which a sweepback angle of a trailing edge is small, as shown in Fig. 5B, and a shape as shown in Fig. 5C are possible.

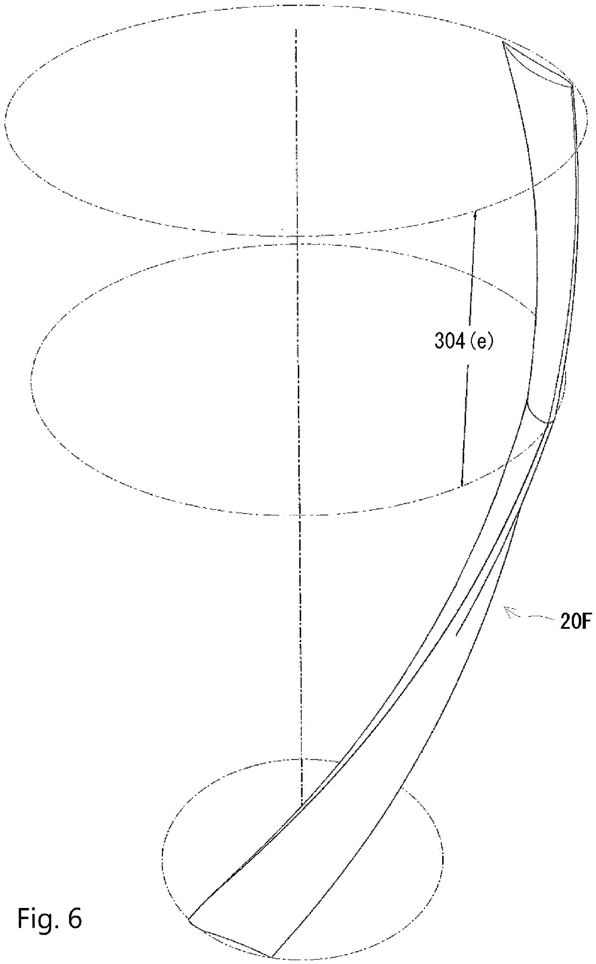

Not only adjusting the chord length and the sweepback angle, but also changing an expansion angle θ (see Fig. 3) in the middle of the blade span is possible. For example, when the expansion angle θ is 0 degrees, the shape is the same as that of a conventional straight blade turbine and a helical turbine. A shape obtained by combining this shape and a logarithmic spiral form is effective as means for increasing the length of the blade span while keeping the rotation radius to a certain extent. A configuration in which a logarithmic-spiral shape is joined to one or both of a blade root side or a blade tip side of a conventional straight blade turbine or helical turbine, a configuration opposite thereto, or a configuration in which joining is alternately repeated is possible. For example, in Fig. 6, the angle θ of a portion e is 0 degrees, as in a helical turbine.

### <Seventh Embodiment: Turbine Coupling Structure>

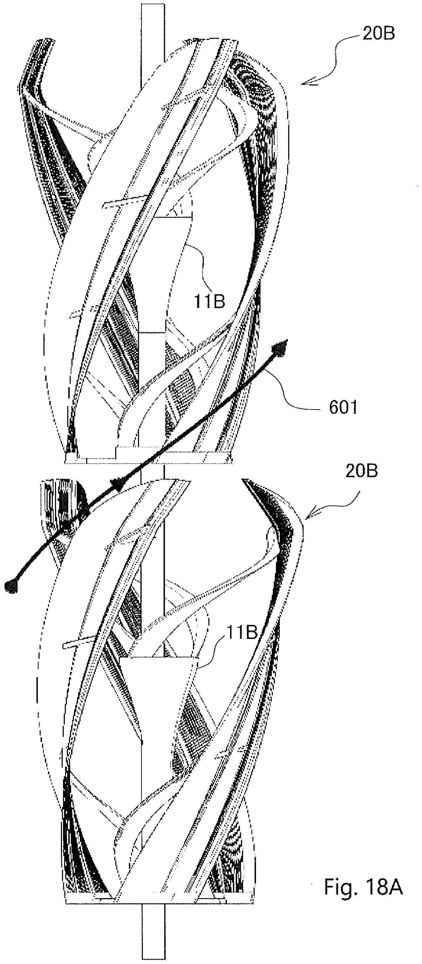

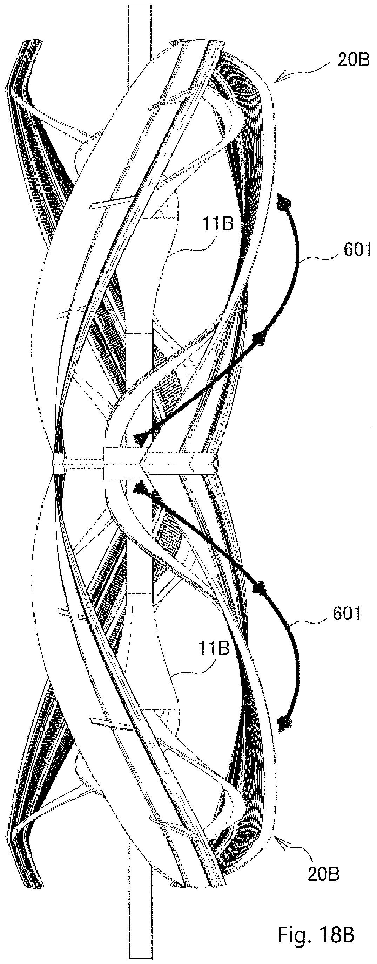

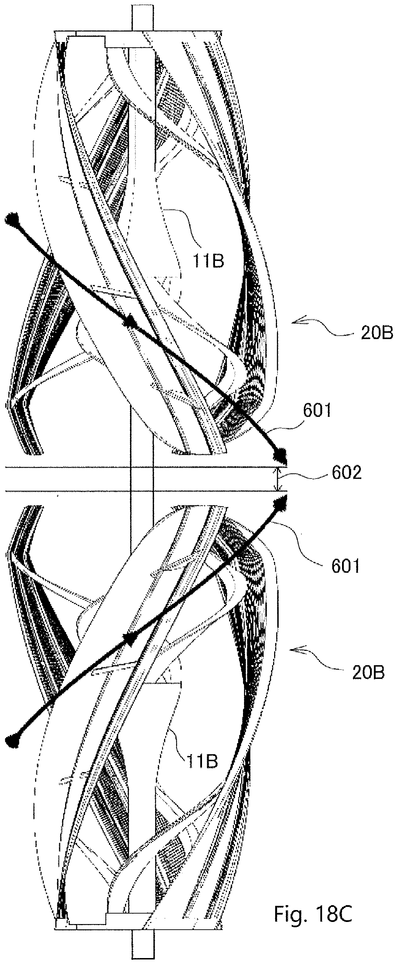

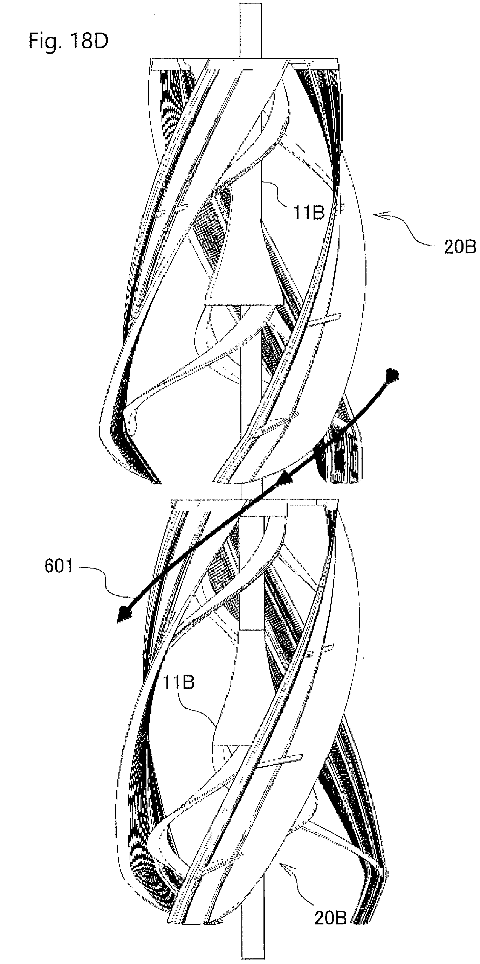

Figs. 18A, 18B, 18C, and 18D show connected installation of vertical axis turbines according to a seventh embodiment of the present invention. Units of the vertical axis turbines according to the first to seventh embodiments may have a so-called tandem structure, in which a plurality of units are combined so as to rotate in the same direction and are connected to the same shaft. In this case, although there are various possible combinations of a type in which the rotation radius of each blade decreases downward (type A) and a type in which the rotation radius of each blade increases downward (type B), such as A + A, A + B, B + A, and B + B, as shown in Figs. 18A, 18B, 18C, and 18D, it is desirable to select a suitable combination according to the conditions, such as the installation site and the season. Instead of connecting the units to the same shaft, a so-called stack structure may be adopted, in which output modules formed by integrating the units with energy conversion units, such as generators, are stacked at the same vertical axis position. By adopting this stack structure, the total wind receiving area is increased with a small installation area. Thus, it is possible to obtain a larger kinetic energy. This stack structure is uniquely effective for vertical axis turbines.

As shown in Figs. 18A, 18B, 18C, and 18D, the turbines may be formed such that a portion or the entirety of the rotation radius of the blades decreases or increases in the vertical direction. In a configuration in which the rotation radius decreases in the vertical direction, that is, when the turbines are installed such that the blade tips are located on the upper side of the turbines, the kinetic energy of the upward component of the airflow increases the rotational speed. Hence, it can be said that this configuration is suitable for installation in a place where there is a large amount of upward component of the airflow, such as on the roof of a building or on the ridgeline of a mountain. In a configuration in which the rotation radius increases in the vertical direction, that is, when the turbines are installed such that the blade tips are located on the lower side of the turbines, the kinetic energy of the downward component of the airflow, rainfall, and snowfall increases the rotational speed. Hence, this configuration is suitable for installation in a place where there is a large amount of downward component of the airflow, such as at the bottom of a high building or in an area where there is a large amount of rainfall or snowfall.

### <Eighth Embodiment: Installation of Contra-Rotating Generator>

In general, a contra-rotating generator is a generator in which a stator of a conventional stator/rotor generator is rotated in a direction opposite to a rotation direction of a rotor, thus relatively doubling the rotation and increasing the power generating capacity. In recent years, the contra-rotating generators are actively adopted in the fields of wind power generation, hydroelectric power generation, etc. The present invention can also use a contra-rotating generator by applying a planetary gear system, by connecting turbines, or the like.

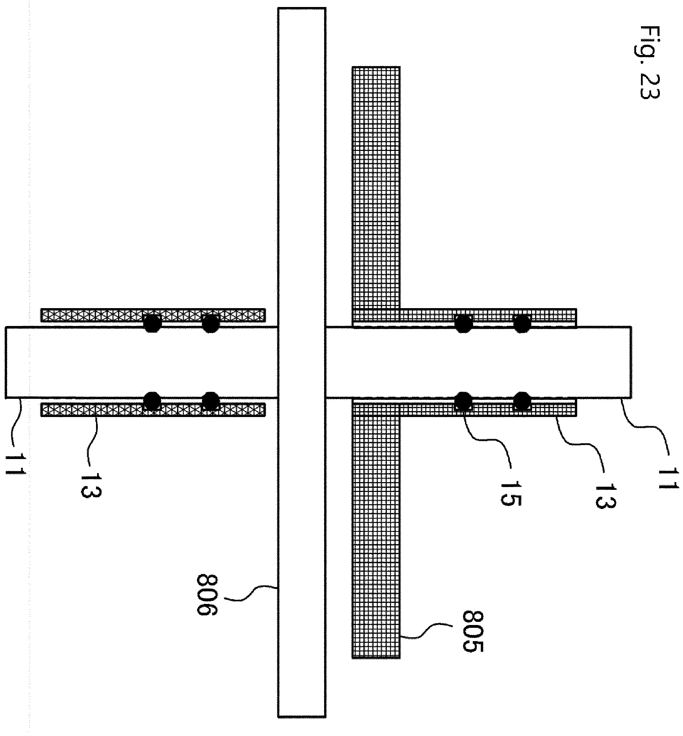

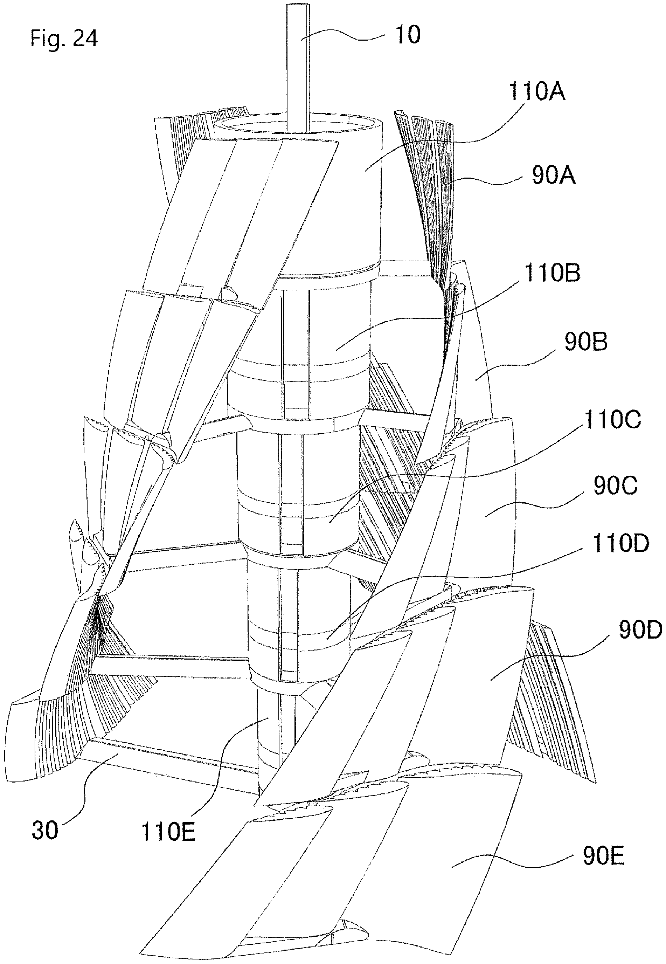

Figs. 23 and 24 show configuration examples of a contra-rotating generator, which includes a magnet plate 805 and a coil plate 806 that rotate relative to each other. The coil plate 806 is attached to a rotary shaft 11 of a double rotary shaft, and the magnet plate 805 is fixed to a rotation axis 13. A bearing 15 is interposed between the rotation axes 11 and 13, so that the rotation axes 11 and 13 rotate in the opposite directions.

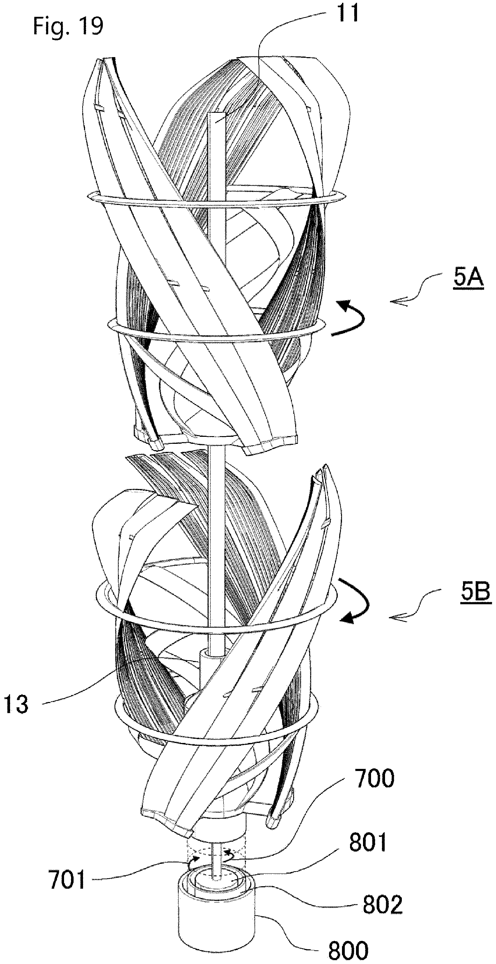

Fig. 19 is a perspective view of a two-stage-structure vertical axis turbine. The vertical axis turbine includes a vertical axis turbine 5A, which is located on the upper side with the blade upper surfaces facing inside, and a vertical axis turbine 5B, which is located on the lower side with the blade upper surfaces facing inside.

The vertical axis turbines 5A and 5B are disposed so as to expand on the same side and rotate in opposite directions. In Fig. 19, the vertical axis turbine 5A rotates counterclockwise, and the vertical axis turbine 5B rotates clockwise.

Herein, the vertical axis turbine 5A has a rotation axis 11, and the vertical axis turbine 5B has a tubular rotation axis 13. The rotation axis 11 is inserted through the rotation axis 13, and thus, the rotation axis 13 also serves as a bearing for the rotation axis 11.

Fig. 19 shows that the rotation of the rotation axis 11 rotates an internal rotor (for example, a coil) 801 of a contra-rotating generator 800 in a counterclockwise direction 700, and the rotation of the rotation axis 13 rotates an external rotor (for example, a magnet) 802 in a clockwise direction 701.

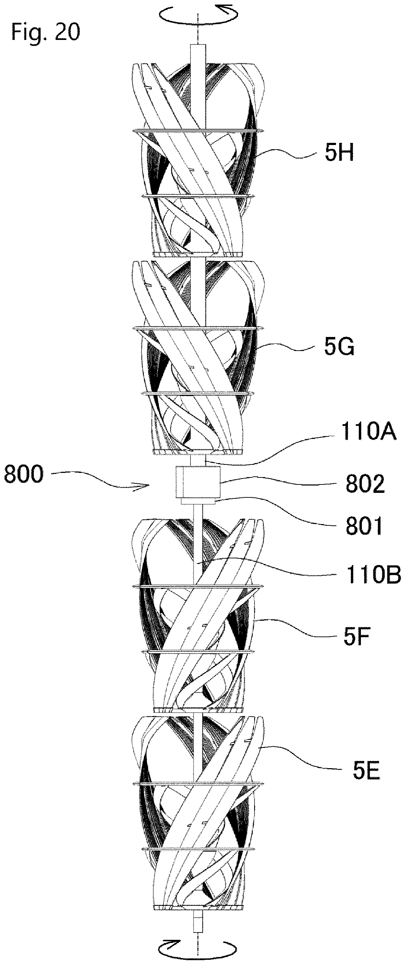

Fig. 20 shows another configuration example of rotation transmission to the contra-rotating generator 800. Although the rotation transmission to the contra-rotating generator 800 may be performed by using coaxial rotary shafts, as shown in Fig. 19, it is also possible to dispose a contra-rotating generator in the middle of multi-stage turbines rotating in opposite directions such that the rotary shafts of the contra-rotating generator rotating in opposite directions extend in the vertically opposite directions, as shown in Fig. 20. Specifically, as a method for connecting two or more pairs of vertical axis turbines (blade units) rotating in opposite directions to the contra-rotating generator 800, instead of using coaxial rotary shafts, two rotary shafts 110A and 110B having the same central axis in the generator 800 are extended in the vertical direction and are rotated in opposite directions. In Fig. 20, lower vertical axis turbines 5E and 5F are connected to a coil-side rotor 801 via the rotary shaft 110B, and vertical axis turbines 5G and 5H located on the upper side are connected to a magnet-side rotor 802 via the rotary shaft 110A. The two rotors 801 and 802 rotate in opposite directions, thus doubling the relative rotation of the generator and increasing the power generation efficiency, while reducing the cost, compared with a case where coaxial shafts are used. Note that the number of vertical axis turbines rotating in opposite directions is not limited.

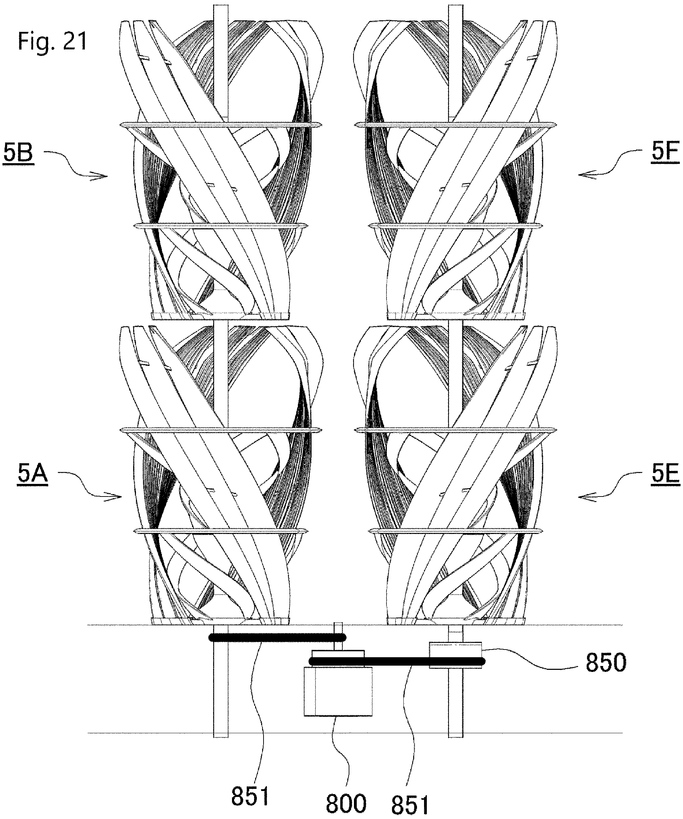

Furthermore, Fig. 21 shows a configuration in which two-stage connected vertical axis turbines 5A and 5B and vertical axis turbines 5E and 5F are installed in parallel. The thus-configured vertical axis turbines may be connected to a contra-rotating generator through transmission devices, such as a pulley 850 and belts 851. Alternatively, the vertical axis turbines installed in parallel may be rotated in opposite directions and connected to a contra-rotating generator by using gears.

### <Ninth Embodiment: <Use of Magnus Effect>

It is known that a rotating sphere, cylinder, cone, or frustum in a uniform flow is subjected to a force (lift) perpendicular to the moving direction or the uniform flow. This is called the Magnus effect. Because the overall shape of a vertical-axis spiral turbine when the blades are rotating is cylindrical, the Magnus effect works not only on the blades but also on the turbine itself. Because, unlike a horizontal axis turbine, a vertical axis turbine does not have the center of gravity at a high position, and the wind pressure is uniformly applied to the entire turbine, the vertical axis turbine is advantageous in terms of safety in strong winds. Nevertheless, in an environment in which strong winds blow for a certain period of time from the same direction, the entire turbine, the shaft, or the like is subjected to a strong pressure due to the Magnus effect.

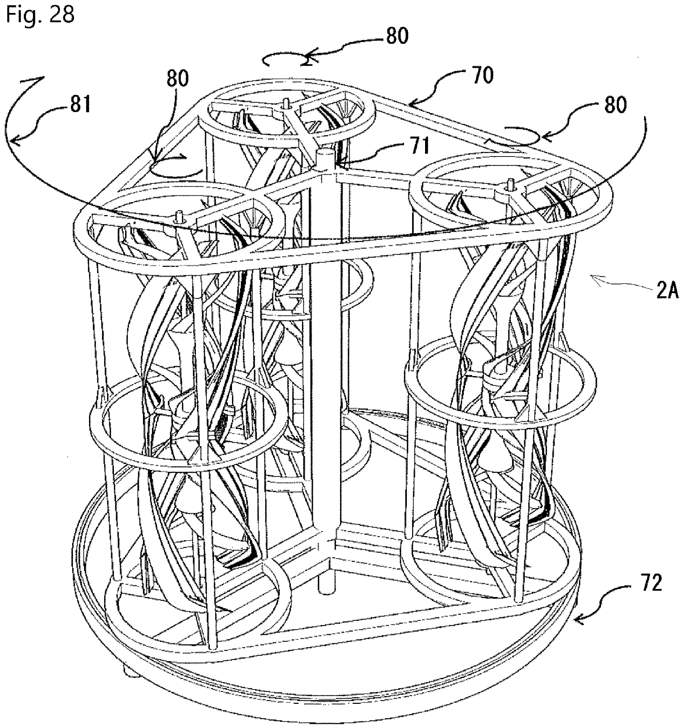

As a configuration for protecting the turbines from such strong wind pressure and for converting the lift caused by the Magnus effect into rotational energy, Fig. 28 shows a ninth embodiment of the present invention. As shown in Fig. 28, in the ninth embodiment of the present invention, an integrated frame 70 with which a plurality of vertical axis turbines can be arranged on the same circumference, a rotary shaft 71 of the integrated frame 70, and a track groove 72 that supports outer circumferential legs of the integrated frame 70 and allows rotation are provided to install a plurality of vertical axis turbines, that is, vertical-axis-turbine assemblies.

When the individual vertical axis turbines are installed such that the rotation 80 thereof is clockwise, the rotation 81 of the integrated frame is also clockwise due to the Magnus effect. With this mechanism, the integrated frame can be made to have a stronger structure than the frame of a single vertical axis turbine, and, by converting the pressure on the rotary shaft due to the strong Magnus effect in strong winds into rotational motion, it is possible to ensure safety. The thus-obtained rotational energy can also be converted into electric power and the like for use, as the rotation of the individual vertical axis turbines. The rotation of the individual vertical axis turbines may be transmitted as power to the central rotation axis by a belt drive or the like. Furthermore, the rotational energy of the integrated frame may be transmitted not from the central rotation axis, but from the outer circumferential legs moving in the track groove.

### <Tenth Embodiment: Collapsible Turbine>

Fig. 24 is a perspective view of a vertical axis turbine according to an eighth embodiment of the present invention. The rotation axis is configured to include slide rotation axes 110A, 110B, 110C, 110D, and 110E. Also, slide blades 90A, 90B, 90C, 90D, and 90E divided in the blade span direction and having, for example, roughly similar shapes are provided. By sliding the rotation axis in the axial direction, the slide rotation axes and the slide blades become a collapsed state, thus improving portability. The turbine becomes usable by locking, for example, the rotation axes in a state in which the slide rotation axes 110A, 110B, 110C, 110D, and 110E are extended to the maximum in the axial direction, and the slide blades are also extended to the maximum. The number of slide rotation axes and the number of slide blades are not limited to five and may be any natural number larger than or equal to two. Furthermore, the slide blades do not necessarily have to have similar shapes.

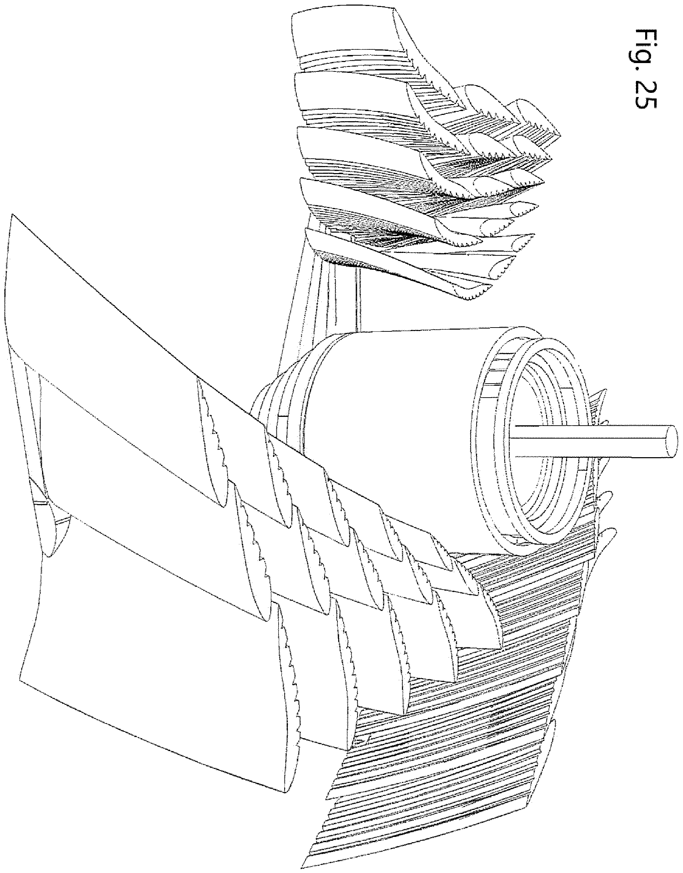

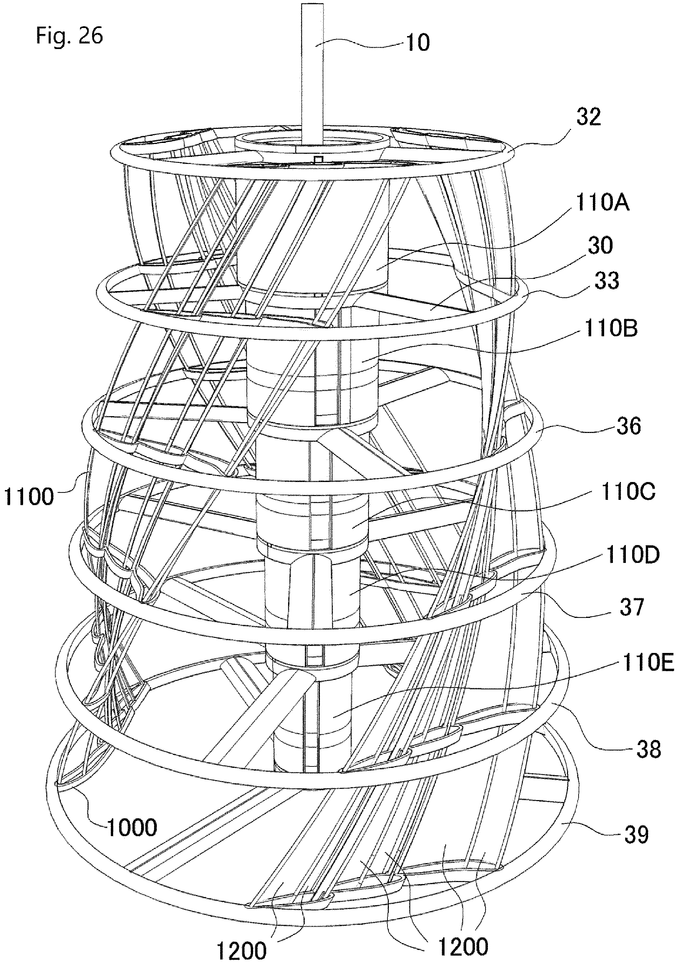

Fig. 25 is a perspective view of the vertical axis turbine according to the tenth embodiment in a contracted and collapsed state, and Fig. 26 is a perspective view of a vertical axis turbine whose blades are formed of a flexible material, in an extended state.

Braces 1000 forming airfoils are fixed to the slide rotary shafts 110A, 110B, 110C, 110D, and 110E via arms 30, a fixing ring 32, a fixing ring 33, a fixing ring 36, a fixing ring 37, and a fixing ring 39. Three-dimensional airfoils are formed with braces 1100 that are made of a flexible material, such as a rope, a fuiya, or a resin material. By stretching sails 1200 over the airfoil frames formed of the braces, the blades are formed. Because the braces 1100 and the sails 1200 are made of flexible materials, the blades can be easily collapsed by sliding and contracting the rotary shafts in the axial direction. Note that the braces 1000 and the arms 30 may be directly fixed together without the fixing rings.

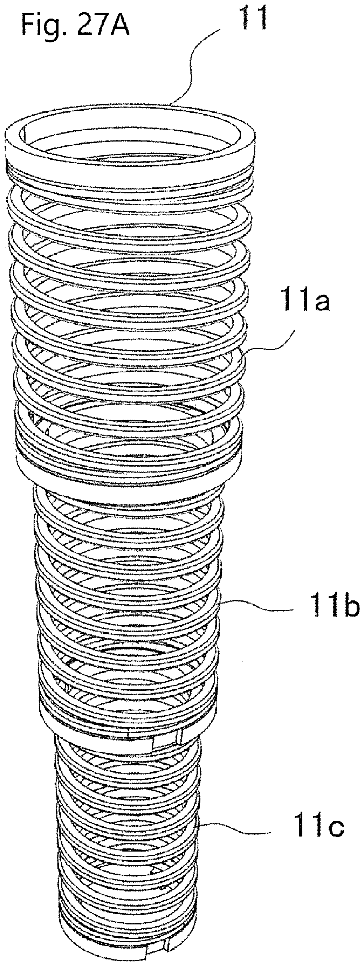

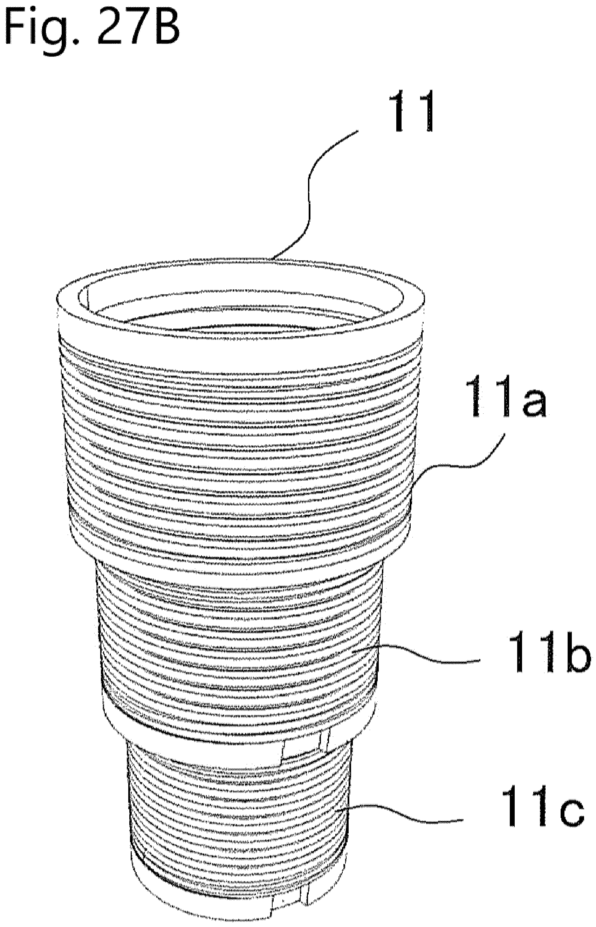

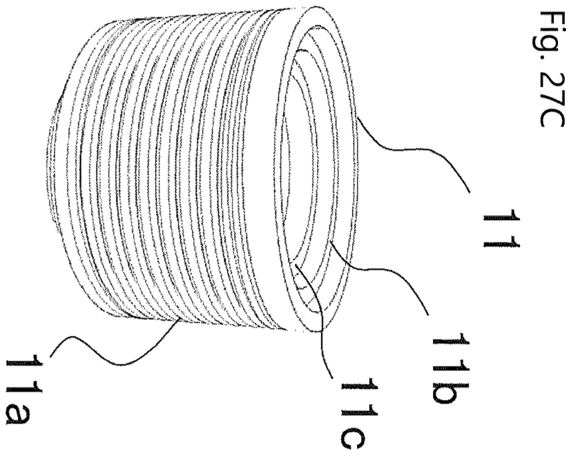

Figs. 27A to 27C show an example in which an extendable/contractable rotation axis is formed of a coil spring. The rotary shaft includes a large-diameter portion 11a, a medium-diameter portion 11b, and a small-diameter portion 11c. Fig. 27A shows an extended state, Fig. 27B shows a state in the middle of contracting, and Fig. 27C shows a contracted state. As shown in Fig. 27C, with this coil-spring rotation axis, a length thereof in a contracted state can be made minimum, which is smaller than the length of the slide rotation axis. Hence, it is possible to further reduce the size of the vertical axis turbine in a collapsed state.

### <Eleventh Embodiment: Horizontal Installation>

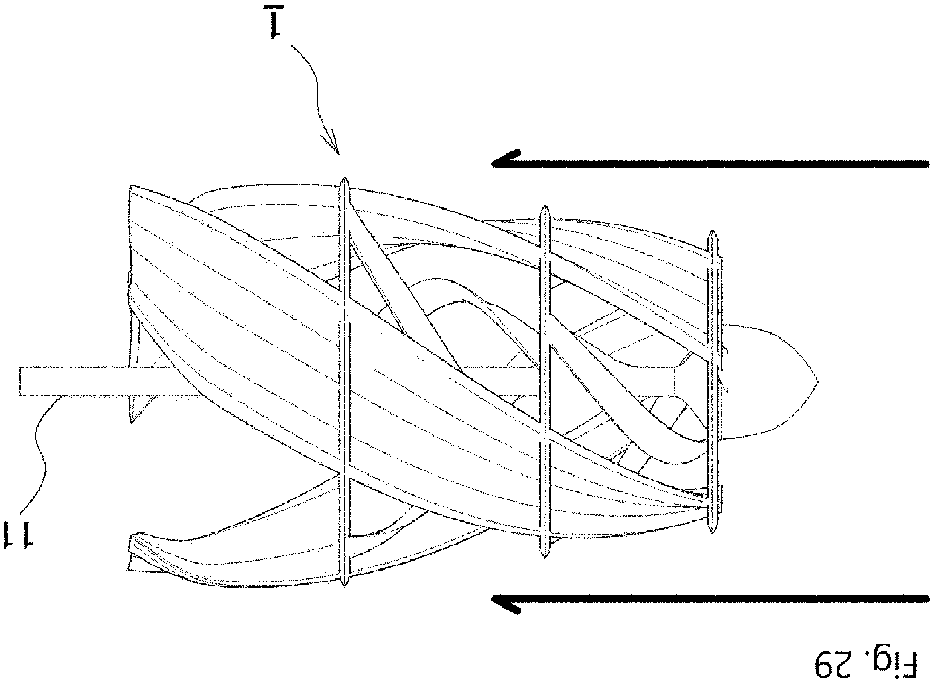

Fig. 29 shows a horizontally installed vertical axis turbine. That is, the vertical axis turbine is installed such that the rotation axis 11 is horizontal and such that the extending direction thereof is the same as (parallel to) the flow direction in Fig. 29 (indicated by arrows in Fig. 29) .

With this configuration, it is possible to horizontally install the vertical axis turbine in a manner laying on a lateral side thereof in an environment where the flow occurs only in a certain direction, such as a river. In addition, even when installed horizontally (i.e., such that the flow and the rotation axis 11 are parallel to each other), the vertical axis turbine can fully demonstrate its performance. If horizontally installed, a vertical axis turbine can be mounted on, for example, the roof, the engine room, or the like of a car, as well as on a railway vehicle, a ship, and the like. Thus, the application of the vertical axis turbine can be expanded.

Although the vertical axis turbine of the present invention has been described above, the vertical axis turbine of the present invention is not limited to the above-described embodiments and may be modified, enlarged, reduced, or partially altered as appropriate for implementation without changing the gist of the present invention, and such modifications and the like are all within the scope of the technical idea of the present invention. For example, the number of blades and the number of sub-blades constituting each blade are not limited. Of course, the vertical axis turbine of the present invention is not limited to one that is rotated by kinetic energy of gas, and may be any one that is rotated by kinetic energy of fluid (for example, water).

### Industrial Applicability

The vertical axis turbine of the present invention has the advantageous effects described in detail above. Hence, the present invention has an economic value and is applicable in various industries including the power generation industry.

### Reference Signs List

1A, 2A Vertical axis turbine
10 Axis
11, 11B, 13 Rotation axis
20 Blade
20B Blade (with slit)
20C Modification of blade
20D Another modification of blade
20E Another modification of blade
20F Example blade combined with helical turbine (partially logarithmic spiral form)
21 First sub-blade
22 Second sub-blade
23 Third sub-blade
30 Arm
30B Arm (spiral or logarithmic spiral)
30C Arm (oblique straight)
41 First slit
42 Second slit
50 Vortex generator (wedge-shaped convex type)
51 Vortex generator (plate-shaped convex type)
52 Vortex generator (longitudinal-groove-shaped concave type)
53 Vortex generator (transverse-groove-shaped concave type)
54 Vortex generator (recessed concave type) 60 Winglet (divided tip type)
61 Winglet (curved tip type)
62 Winglet (three-dimensional curved tip type)
63 Winglet (rounded tip type)
70 Integrated frame
71 Rotary shaft
72 Track groove
800 Contra-rotating generator
801 Rotor (coil or magnet)
802 Rotor (magnet or coil)

## Claims

1. A vertical axis turbine having a blade disposed around a vertical rotation axis via an arm,
wherein the blade is formed so as to expand at least in one section among sections between a blade root, which is an end closer to the rotation axis, and a blade tip, which is an end farther from the rotation axis, has an airfoil shape in a horizontal section, which is a section substantially perpendicular to an extending direction of the rotary shaft, and is formed such that a horizontal distance of the horizontal section from the rotation axis changes in a logarithmic spiral form in an axial direction of the rotary shaft.

2. The vertical axis turbine according to Claim 1,
wherein the blade has one or two or more slits formed in a blade span direction of the airfoil.

3. The vertical axis turbine according to Claim 1 or 2,
wherein the blade has, on a surface of the airfoil, a vortex generator for producing a fluid vortex.

4. The vertical axis turbine according to any one of Claims 1 to 3,
wherein the blade has, at a leading edge of the airfoil, a dogtooth shape for producing a fluid vortex.

5. The vertical axis turbine according to any one of Claims 1 to 4, wherein the blade has, at a blade tip of the airfoil, a flat or three-dimensional winglet for preventing or utilizing a blade tip vortex due to a fluid.

6. The vertical axis turbine according to any one of Claims 1 to 5, wherein a chord length of the airfoil of the blade decreases or increases as the distance between the rotary shaft and a chord center of the blade increases in a spiral form from the blade root side toward the blade tip side of the rotary shaft.

7. A connected vertical axis turbine comprising the vertical axis turbines according to any one of Claims 1 to 6 connected in multiple stages in the axial direction of the rotation axis.

8. The connected vertical axis turbine according to Claim 7, wherein, in the connected vertical axis turbine, one vertical axis turbine has a tubular rotation axis, the other vertical axis turbine has a rod-shaped rotation axis to be inserted into the tubular rotation axis, the rotation axes rotate in opposite directions, a magnet of a contra-rotating generator is connected to one rotation axis, a coil of the contra-rotating generator is connected to the other rotation axis, and the magnet and the coil are configured to rotate in opposite directions.

9. The vertical axis turbine according to Claim 7, wherein, in the connected vertical axis turbine, the vertical axis turbines are disposed above and below the contra-rotating generator so as to sandwich the contra-rotating generator and such that central axes of the rotation axes are aligned, the upper and lower rotation axes are each connected to a corresponding one of a coil-side rotor and a magnet-side rotor of the contra-rotating generator, and the upper and lower rotation axes are rotated in opposite directions to rotate the magnet and the coil in opposite directions.

10. A connected vertical axis turbine, wherein a plurality of the vertical axis turbines according to any one of Claims 1 to 7 are installed adjacent to each other in parallel, and the rotation axes of the vertical axis turbines transmit power via a pulley, a belt, a gear, or the like.

11. The vertical axis turbine according to any one of Claims 1 to 9, further comprising an integrated frame with which a plurality of vertical-axis spiral turbines can be disposed on a same circumference, wherein a rotation axis of the integrated frame and a track groove that supports an outer circumferential leg of the integrated frame and allows rotation are provided to install a plurality of vertical-axis-turbine assemblies.

12. The vertical axis turbine according to any one of Claims 1 to 10, wherein the rotation axis is configured to be extendable/contractable, the blade includes slide blades divided in a blade span direction or a blade formed by stretching a sail over an airfoil frame that is formed of braces made of a flexible material, and the blade is configured to be collapsed by contracting the rotary shaft in the axial direction.

13. The vertical axis turbine according to any one of Claims 1 to 11, wherein an installation direction of the rotation axis is parallel to a direction of a fluid flow.
